# EUROPÄISCHE PATENTANMELDUNG

(11) **EP 1 626 224 A2**
(43) Veröffentlichungstag der Anmeldung: **15.02.2006**
(21) Anmeldenummer: 04019147.0
(22) Anmeldetag: 12.08.2004
(51) Int. Cl.: F16N 13/16

(54) **Einrichtung zur Zuführung von Schmierstoff**

(71) Anmelder: Baier & Köppel GmbH & Co., D-91257 Pegnitz (DE)
(72) Erfinder: Brendel, Jürgen, 91278 Pottenstein (DE)
(74) Vertreter: Zech, Stefan Markus

(57) **Zusammenfassung**

Die Erfindung betrifft eine Einrichtung zur Zuführung von Schmierstoff an ein in einem Fahrzeug, einer Bau-, Land- oder Industriemaschine eingebautes Schmierstoffverteilersystem, das eine Mehrzahl von Schmierstellen (11, 12, 13) ggf. unter Zwischenschaltung eines oder mehrerer Progressivverteiler (14) mit Schmierstoff versorgt, umfassend ein Dosierbehältnis (15), in dem ein Schmierstoffaufnahmeraum (16) ausgebildet ist, wobei der Schmierstoffaufnahmeraum (16) durch Innenwandungen (17, 18) des Dosierbehältnisses und eine Vorderseite (19) eines verschieblich gelagerten Kolbens (20) begrenzt ist, wobei der Schmierstoffaufnahmeraum (16) einen Schmierstoffeinlass (21) zur Aufnahme einer vorbestimmten Menge an Schmierstoff und einen Schmierauslass (22) zur Abgabe von Schmierstoff an das Schmierstoffverteilersystem (10) aufweist, wobei das Dosierbehältnis (15) einen Druckbeaufschlagungsraum (23) an der dem Schmierstoffaufnahmeraum (16) abgewandten Seite des Kolbens aufweist und wobei der Druckbeaufschlagungsraum (23) über einen Druckfluidanschluss (24) mit vom Fahrzeug, von der Bau-, Land- oder Industriemaschine bereitgestelltem Druckfluid (hydraulisch oder pneumatisch) beaufschlagbar ist.

## Beschreibung

Die Erfindung betrifft eine Einrichtung zur Zuführung von Schmierstoff an ein in einem Fahrzeug, einer Bau-, Land- oder Industriemaschine eingebautes Schmierstoffverteilersystem, das eine Mehrzahl von Schmierstellen ggf. unter Zwischenschaltung eines oder mehrerer Progressivverteiler mit Schmierstoff versorgt, umfassend ein Dosierbehältnis, in dem ein Schmierstoffaufnahmeraum ausgebildet ist, wobei der Schmierstoffaufnahmeraum durch Innenwandungen des Dosierbehältnisses und eine Vorderseite eines verschieblich gelagerten Kolbens begrenzt ist, wobei der Schmierstoffaufnahmeraum weiterhin einer einen Schmierstoffeinlass zur Aufnahme einer vorbestimmten Menge an Schmierstoff und einen Schmierstoffauslass zur Abgabe von Schmierstoff an das Schmierstoffverteilersystem aufweist. Weiterhin betrifft die Erfindung ein Verfahren zur Zuführung von Schmierstoff an ein in ein Fahrzeug, eine Bau-, Land- oder Industriemaschine eingebautes Schmierstoff-verteilersystem.

Es sind verschiedene Einrichtungen und Verfahren zur Dosierung von Schmierstoff in einem Schmierstoffverteilersystem umfassend ein Dosierbehältnis bekannt. In vielen Systemen werden speziell ausgestaltete Dosierpumpen eingesetzt, welche in einer gewünschten Dosierung Schmierstoff in ein Schmierstoffverteilersystem pressen.

In weniger aufwändigen Systemen wird eine vordosierte Menge an Schmierstoff manuell in das Schmierstoffverteilersystem eingepresst. Das manuelle Einpressen von Schmierstoff in ein Schmierstoffverteilersystem ist gerade, wenn ein oder mehrere Progressivverteiler zwischengeschaltet sind, äußerst kraftaufwändig.

Die Aufgabe der vorliegenden Erfindung besteht demgegenüber darin, eine Einrichtung zu schaffen bzw. ein Verfahren anzugeben, die bzw. das es gestattet, eine vorbestimmte Menge an Schmierstoff auf einfache Weise in ein Schmierstoffverteilersystem zu pressen.

Diese Aufgabe wird in vorrichtungstechnischer Hinsicht mit einer Einrichtung nach den Merkmalen des Anspruches 1 und in verfahrenstechnischer Hinsicht mit den Merkmalen des Anspruches 12 gelost. Vorteilhafte Weiterbildungen sind in den Unteransprüchen angegeben.

Ein Kerngedanke der vorliegenden Erfindung besteht dabei darin, dass Schmierstoff in das in einem Fahrzeug, einer Bau-, Land- oder Industriemaschine eingebauten Schmierstoffverteilersystem nicht mehr manuell eingepresst wird, sondern unter Zuhilfenahme von Druckfluid, das ohnehin für Arbeitseinrichtungen an der Bau-, Land- oder Industriemaschine zur Verfügung steht. Bei einem Bagger beispielsweise ist ohnehin ein Hydrauliksystem vorgesehen zum Antrieb beispielsweise der Schaufel, des Baggerarms, etc.. Der im Hydrauliksystem des Baggers bereitstellbare Druck kann nun auch dazu ausgenutzt werden, Schmierstoff in das Schmierstoffverteilersystem einzupressen.

Bei der erfindungsgemäßen Einrichtung ist hierzu innerhalb des Dosierbehältnisses ein Druckbeaufschlagungsraum an der dem Schmierstoffaufnahmeraum abgewandten Seite des Kolbens vorgesehen, wobei der Druckbeaufschlagungsraum über einen Druckfluidanschluss mit dem vom Fahrzeug, von der Bau-, Land- oder Industriemaschine bereitgestellten Druckfluid beaufschlagbar ist, wobei Druckfluid sowohl aus einer hydraulischen als auch aus einer pneumatischen Anlage gemäß der Idee der vorliegenden Erfindung zum Einsatz gelangen kann.

Aufgrund der bei einer hydraulischen Anlage in der Regel bereits ohnehin bereitstehenden hohen Drucke, kann nach einem bevorzugten Aspekt der vorliegenden Erfindung das hydraulische Druckfluid ohne Übersetzung direkt in den Druckbeaufschlagungsraum geführt und dort auf den Kolben einwirken. Pneumatische Anlagen werden dagegen in der Regel eher mit niedrigeren Drücken betrieben, so dass bei Anschluss an ein pneumatisches Druckfluid u.U. eine Übersetzung zur Erhöhung des Druckes des Druckfluids vorgesehen werden müsste.

Nach einem bevorzugten Aspekt der vorliegenden Erfindung ist am Dosierbehältnis eine Zumesseinrichtung vorgesehen, die eine Einstellung bzw. Kontrolle des Verschiebewegs des Kolbens ermöglicht, derart, dass pro Kolbenhub eine einstellbare Menge an Schmierstoff dem Schmierstoffverteilersystem zugeführt wird. Hierdurch kann auf den jeweiligen Schmierstoffbedarf in geeigneter Weise reagiert werden, nämlich einerseits dadurch, dass 10 die zugeführte Menge an Schmierstoff pro Kolbenhub exakt einstellbar ist und auf der anderen Seite dadurch, dass auch gesteuert bzw. kontrolliert werden kann, wie oft bzw. in welchen Zeitintervallen ein Kolbenhub zum Zwecke der Zuführung von Schmierstoff bewirkt wird.

In einer konkreten Ausgestaltung kann die Zumesseinrichtung eine mit dem Kolben verbundene Stange umfassen, die durch eine Wandung des Dosierbehältnisses geführt ist und über das Dosierbehältnis vorsteht. Der Überstand der Stange über das Dosierbehältnis hinaus dient damit als Maß für das aktuelle Volumen des Schmierstoffaufnahmeraums und damit als Maß für das Volumen des im Schmierstoffaufnahmeraumes aufgenommenen Schmierstoffs. Besonders bevorzugt ist an der Stange selbst oder in einem Gehäuse, in dem die über dem Dosierbehältnis überstehende Stange aufgenommen ist, eine Skala vorgesehen, um den aktuellen Wert des Volumens des Schmierstoffaufnahmeraumes bzw. des aufgenommenen Schmierstoffs ablesen zu können.

Generell kann, um die Menge an pro Kolbenhub zugeführtem Schmierstoff zu begrenzen, der Kolbenhub beim Befüllen des Dosierbehältnisses begrenzt werden, und zwar dadurch, dass der Befüllvorgang optisch, beispielsweise 30 unter Zuhilfenahme einer Skala, kontrolliert wird oder dass andere Begrenzungsmittel zum Einsatz gelangen, um den Kolbenhub beim Befüllvorgang auf einen jeweils gewünschten Wert zu begrenzen.

Alternativ ist es bei anderen Ausgestaltungen auch denkbar, beim Befüllvorgang ein maximales Volumen des Schmierstoffaufnahmeraumes zu befüllen und anschließend den Kolbenhub beim Einpressen des Schmierstoffs in das Schmierstoffverteilersystem durch geeignete Mittel, beispielsweise durch einen einstellbaren Anschlag, etc., zu begrenzen.

Die Lagerung der Stange in einer Führung in der stirnseitigen Wandung des Dosierbehältnisses ist auch unabhängig davon, ob die Stange Bestandteil einer Zumesseinrichtung bildet, sinnvoll, da hierdurch ein einfacher und unkomplizierter Aufbau für die erfindungsgemäße Vorrichtung geschaffen wird.

Nach einem weiteren Aspekt der vorliegenden Erfindung sind im Bereich der Führung zur Abdichtung gegen den Druck des Druckfluid Abdichtmittel vorgesehen.

In einer speziellen Ausgestaltung kann das dem Kolben abgewandte Ende 15 der Stange in einem transparenten Gehäuse führt sein, das an der stirnseitigen Wandung des Dosierbehältnisses befestigt ist. Hierdurch ist zunächst sichergestellt, dass das sich bewegende, dem Kolben abgewandte Ende sich frei, eingekapselt in einem Gehäuse bewegen kann. Die Stange erhält somit durch das transparente Gehäuse, das auch als Erweitung des Gehäuses des Dosierbehältnisses angesehen werden kann, einen freien Bewegungsraum. Zusätzlich kann der Hub des Kolbens in beide Richtungen kontrolliert und damit die in den Schmierstoffaufnahmeraum aufgenommene Menge von Schmierstoff bzw. bereits an das Schmierstoffverteilersystem abgegebene Menge an Schmierstoff abgeschätzt werden. Eine besonders gute Kontrolle 25 lässt sich erzielen, wenn am transparenten Behältnis und/oder an der Stange selbst Markierungen nach Art einer Skala vorgegeben sind, die zweckmäßigerweise direkt auf das Füllvolumen des Schmierstoffaufnahmeraumes z.B. in cm³ geeicht ist.

Wenn nicht die Befüllung des Dosierbehältnisses auf ein bestimmtes Zwischenvolumen kontrolliert bzw. eingestellt wird, sondern das Dosierbehältnis maximal mit Schmierstoff befüllt wird, besteht die Möglichkeit, den entgegengesetzten Kolbenhub beim Einpressen des Schmierstoffs in das Schmierstoffverteilersystem zu kontrollieren bzw. einzustellen. Dies kann ebenfalls lediglich durch eine optische Kontrolle erfolgen; besonders zweckmäßig ist es jedoch, an der sich bewegenden Stange an ihrem über dem Dosierbehältnis vorstehenden Ende Begrenzungsmittel vorzusehen, die nach einem entsprechenden Kolbenhub beim Einpressen des Schmierstoffs in das Schmierstoffverteilersystem an einen Anschlag stoßen und so die Schmierstoffabgabe begrenzen.

In einer einfachen, jedoch keineswegs zwingenden Ausführungsform könnte auf der Stange ein Gewinde sein, auf dem eine Mutter ggf. zusammen mit einer Arretierungsmutter auf einer gewünschten Längenposition festlegbar ist. Der Anschlag könnte durch die Außenfläche der stirnseitigen Wandung des Dosierbehältnisses gebildet sein, so dass die Begrenzungsmutter nach 10 einem bestimmten Kolbenhub an der stirnseitigen Wandung des Dosierbehältnisses in Anlage kommt und so die Schmierstoffabgabe begrenzt.

Um den von der Bau-, Land- oder Industriemaschine bereitstellbaren Fluidstrom auf ein geeignetes Maß zu begrenzen, umfasst der Druckfluidanschluss in einer vorzugsweisen Weiterbildung der vorliegenden Erfindung eine Drosseleinrichtung. Diese Drosseleinrichtung kann entweder fest eine vorbestimmte Drosselung bewirken; besonders bevorzugt ist allerdings, wenn die Drosseleinrichtung einstellbar ausgebildet ist, so dass der Drosselungseffekt verstärkt bzw. reduziert werden kann.

Nach einem weiteren Aspekt der vorliegenden Erfindung ist ein zur Drosseleinrichtung parallel geschaltetes Rückschlagventil vorgesehen, das unter Umgehung der Drosseleinrichtung eine Rückführung des Druckfluids und damit eine Reduzierung des Druckbeaufschlagungsraumes gestattet, wenn der vom Fahrzeug der Bau-, Land- oder Industriemaschine am Druckfluidanschluss entgegengesetzte Druck unter einem bestimmten Rückführungsdruck P, abgefallen ist. Hierdurch kann der Schmierstoffaufnahmeraum bei Bedarf erneut mit Schmierstoff befüllt werden.

Nach einem weiteren Aspekt der vorliegenden Erfindung wird auch ein Verfahren zur Durchführung von Schmierstoff an ein in ein Fahrzeug eine Bau-, Land- oder Industriemaschine eingebautes Schmierstoffverteilersystem, das eine Mehrzahl von Schmierstellen ggf. unter Zwischenschaltung eines oder mehrerer Progressivverteiler mit Schmierstoff versorgt, beansprucht, wobei das Verfahren die folgenden Schritte umfasst: Befüllen eines Schmierstoffaufnahmeraumes eines Dosierbehältnisses mit einer vorbestimmten Menge an Schmierstoff, Einpressen der im Dosierbehältnis aufgenommenen Menge an Schmierstoff in das Schmierstoffverteilersystem, wobei das Einpressen unter Einwirkung von Druckfluid aus einem an sich zum Antrieb von Arbeitseinrichtungen dienenden Druckfluidsystem einer Arbeitseinrichtung eines Fahrzeuges, einer Bau-, Land- oder Industriemaschine erfolgt. Dieses 5 Verfahren gestattet das Einpressen von Schmierstoff ohne Zuhilfenahme aufwändiger Schmiermittelpumpen.

In einer bevorzugten Weiterbildung des vorliegenden Verfahrens kann beim Befüllen des Schmierstoffaufnahmeraumes das aktuelle Volumen, d.h. die bereits aufgenommene Menge an Schmierstoff kontrolliert, insbesondere, anhand einer Skala abgelesen werden. Hierdurch lässt sich eine gewünschte Dosierung bequem einstellen bzw. kontrollieren.

Nach einem weiteren Aspekt des vorliegenden Verfahrens wird vor bzw. bei erneutem Befüllen des Schmierstoffaufnahmeraumes ein mit Druckfluid gefüllter Druckbeaufschlagungsraum insbesondere durch Rückführung des Druckfluids an das Fahrzeug bzw. an die Bau-, Land- oder Industriemaschine geleert bzw. verkleinert. Diese Rückführung des Druckfluids kann beispielsweise gleichzeitig mit Befüllung des Schmierstoffaufnahmeraums durch den vom Schmierstoff auf einen Kolben ausgeübten Druck erfolgen. Der hierbei aufzuwendende Druck bzw. Kraftaufwand ist so gering, dass mit einer manuell betätigbaren Schmierstoffpumpe der Schmierstoffaufnahmeraum befüllt werden kann. Dies wird nach einem besonders vorteilhaften Aspekt der vorliegenden Erfindung weiterhin dadurch erreicht, dass eine Rückführung des Druckfluids vorteilhafterweise in einem Zeitraum vorgenommen wird, in dem in eine Beaufschlagung parallel angeschlossene Arbeitseinrichtungen mit Druckfluid nicht erfolgt und der Druck unter einem Rückführungsdruck P, abgefallen ist. Bestimmte Teilsektionen einer Druckfluidanlage eines Fahrzeuges, einer Bau-, Land- oder Industriemaschine werden im normalen Betrieb von Zeit zu Zeit immer wieder drucklos gestellt und zwar meist dann, wenn die angeschlossene Arbeitseinrichtung bzw. angeschlossenen Arbeitseinrichtungen nicht in Betrieb sind. In diesen Zeiträumen ist eine besonders einfache Befüllung des Schmierstoffaufnahmeraumes möglich.

Die Erfindung wird nachstehend auch hinsichtlich weiterer Merkmale und Vorteile anhand der Beschreibung von Ausführungsbeispielen und unter Bezugnahme auf die beiliegenden Zeichnungen näher erläutert. Hierbei zeigen:
- Fig. 1: eine Prinzipskizze einer Ausführungsform der erfmdungsgemäßen Einrichtung;
- Fig. 2: eine Seitenansicht einer konkreten Ausführungsform der erfindungsgemäßen Einrichtung;

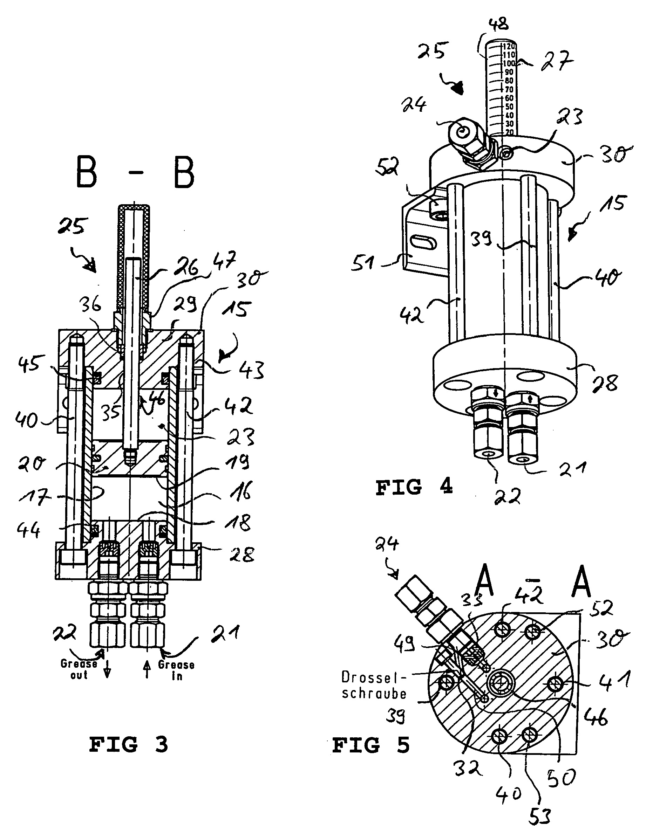

- Fig. 3: eine Schnittansicht der Einrichtung nach Fig. 2 entlang der Linie B-B;
- Fig. 4: eine perspektivische Ansicht der in Fig. 2 dargestellten Ausführungsform;
- Fig. 5: eine Teilansicht entlang der Linie A-A in Fig. 2.

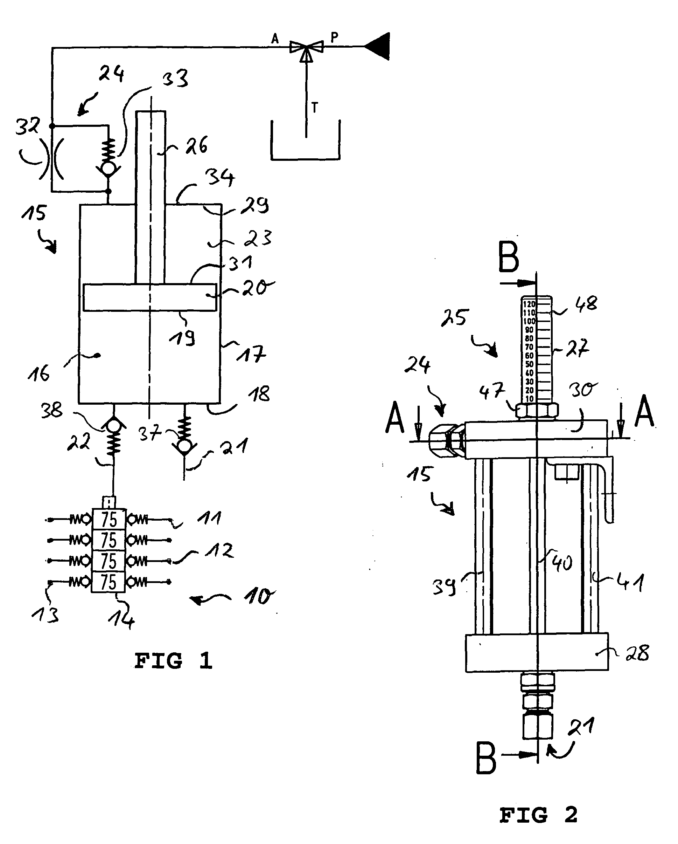

In Fig. 1 ist eine Ausführungsform einer erfindungsgemäßen Einrichtung zur Zuführung von Schmierstoff an ein in einem Fahrzeug, einer Bau-, Land- oder Industriemaschine eingebautes Schmierstoffverteilersystem in einer Prinzipansicht dargestellt. Die Einrichtung umfasst ein Dosierbehältnis 15 mit einer zylindrisch umlaufenden Innenwandung 17, einer stirnseitigen Innenwandung 18 sowie einer stirnseitigen Wandung 29.

Innerhalb des Dosierbehältnisses 15 ist ein Kolben 20 verschieblich gelagert. Der Kolben 20 unterteilt den Innenraum des Dosierbehältnisses 15 in einen Schmierstoffaufnahmeraum 16 sowie einen Druckbeaufschlagungsraum 23. Der Kolben 20 weist eine den Schmierstoffaufnahmeraum 16 begrenzende Vorderseite 19 sowie eine dem Druckbeaufschlagungsraum 23 zugewandte Rückseite 31 auf. An der Rückseite 31 des Kolbens ist eine Stange 26 angeschlossen, die durch eine Führung 35 in der stirnseitigen Wandung 29 geführt ist.

Der Schmierstoffaufnahmeraum 16 kann über einen Schmierstoffeinlass 21 35 mit Schmierstoff befüllt werden. Der Schmierstoffeinlass 21 umfasst weiterhin ein einlassseitiges Rückschlagventil 37, das eine Rückströmung von Schmierstoff aus dem Schmierstoffaufnahmeraum 16 zurück in den Schmierstoffeinlass 21 verhindert.

Weiterhin ist am Schmierstoffaufnahmeraum 16 auch ein Schmierstoffauslass 5 22 vorgesehen, wobei auch hier gleichzeitig ein auslassseitiges Rückschlagventil 38 angeschlossen ist, um eine Rückströmung von in den Schmierstoffauslass 22 gepressten Schmierstoff in den Schmierstoffaufnahmeraum 16 zu verhindern.

Am Schmierstoffauslass 22 kann beispielsweise ein Progressivverteiler 14 angeschlossen sein, der Schmierstoff an mehrere Schmierstellen 11, 12, 13 fördert.

Zur Beaufschlagung des Druckbeaufschlagungsraumes 23 mit Druckfluid 15 weist dieser einen Druckfluidanschluss 24 auf, der hier konkret parallel zueinander angeschlossen eine Drosseleinrichtung 32 sowie ein erstes Rückschlagventil 33 aufweist. Die Drosseleinrichtung 32 ist dafür vorgesehen, den Fluss eines in den Druckbeaufschlagungsraum 23 einströmenden Druckfluids zu drosseln. Das Rückschlagventil 33 ermöglicht eine Rückführung des Druckfluids entgegen der Einströmeinrichtung unter Umgehung der Drosseleinrichtung 32.

In Fig. 2 ist das Dosierbehältnis 15 nach der Erfindung in einer Seitenansicht dargestellt. Die stirnseitige Wandung 18 und die gegenüberliegende stirnseitige Wandung 29 sind hier jeweils als zylindrische Basisplatte 28, 30 ausgebildet. Zwischen der zylindrischen Basisplatte 28 und der zylindrischen Basisplatte 30 ist eine die Innenwandung 17 ausbildende umlaufende, seitliche Behältniswand eingespannt. Die Einspannung erfolgt über vier sich durch die zylindrische Basisplatte 30 erstreckende Bolzen 39, 40, 41, 42, die mit einem Gewindeabschnitt 43 jeweils in ein entsprechend ausgebildetes Innengewinde in der zylindrischen Basisplatte 30 eingreifen. An den zylindrischen Basisplatten 28, 30 sind jeweils umlaufende Dichtmittel 44, 45 vorgesehen, die eine Abdichtung zwischen Behältniswand und Basisplatten 28, 30 bewirken.

Der Kolben 20 ist mit der bereits erwählten Stange 26 in einer Bohrung 46, die gleichzeitig eine Führung 35 für die Stange 26 definiert, geführt. Die Bohrung 46 weist zu einer Außenfläche 34 der zylindrischen Basisplatte 28 5 hin eine Erweiterung auf, in die Abdichtmittel 36 zur Abdichtung des Druckbeaufschlagungsraumes 23 nach außen hin aufgenommen sind.

Weiterhin ist in die Bohrung 46 bzw. die Erweiterung mittels eines Sockels 47 ein transparentes Gehäuse 27 als Teil einer Zumesseinrichtung 25 eingeschraubt, derart, dass die über der Bohrung 46 überstehende Stange 26 im transparenten Gehäuse 27 aufgenommen ist. Das transparente Gehäuse 27 kann weiterhin mit einer Skaleneinteilung 48 versehen sein, um einen aktuellen Kolbenhub anhand der Position des Endes der Stange 26 innerhalb des transparenten Gehäuses 27 anhand der Skaleneinteilung 48 ablesen zu können.

In der zylindrischen Basisplatte ist weiterhin noch der bereits erwähnte Druckfluidanschluss 24 integriert, umfassend die bereits erwähnte Drosseleinrichtung 32 sowie das parallel hierzu angeordnete erste Rückschlagventil 20 33. Die Drosseleinrichtung 32 umfasst hier konkret eine Drosselschraube, die in einem Gewindekanal 50 verstellbar angeordnet ist, derart, dass das Druckfluid um eine einstellbare Gewindelänge im Gewindekanal 50 geführt ist, wobei es von einem seitlichen Kanal 49 auf den Gewindekanal 50 zugeführt wird.

Der gegenüberliegenden zylindrisch Basisplatte 28 sind jeweils Schmierstoffeinlass 21 mit einlassseitigem Rückschlagventil 37 sowie Schmierstoffauslass 22 mit auslassseitigem Rückschlagventil 38 integriert.

An einem der Basisplatten 28, 30, hier konkret an der druckfluidseitigen Basisplatte 28 kann noch ein Befestigungsbeschlag 51 mittels zweiter Befestigungsschrauben 52, 53 befestigt sein, um das Dosierbehältnis 15 an einem Fahr-, Bau-, Land- oder Industriemaschine zu befestigen.

### Bezugszeichenliste

- 11-13: Schmierstellen
- 14: Progressivverteiler
- 15: Dosierbehältnis
- 16: Schmierstoffaufnahmeraum
- 17: Innenwandung, seitliche Wandung
- 18: Innenwandung, stirnseitige Wandung
- 19: Vorderseite (Kolben)
- 20: Kolben
- 21: Schmierstoffeinlass
- 22: Schmierstoffauslass
- 23: Druckbeaufschlagungsraum
- 24: Druckfluidanschluss
- 25: Zumesseinrichtung
- 26: Stange
- 27: (transparentes) Gehäuse
- 28: Zylindrische Basisplatte
- 29: stirnseitige Wandung
- 30: Zylindrische Basisplatte
- 31: Rückseite (Kolben)
- 32: Drosseleinrichtung
- 33: erstes Rückschlagventil
- 34: Außenfläche (stirnseitige Wandung)
- 35: Führung
- 36: Abdichtung
- 37: einlassseitiges Rückschlagventil
- 38: auslassseitiges Rückschlagventil
- 39 - 42: Bolzen
- 43: Gewindeabschnitt
- 44, 45: Dichtmittel
- 46: Bohrung
- 47: Sockel
- 48: Skaleneinteilung
- 49: seitlicher Kanal
- 50: Gewindekanal
- 51: Befestigungsbeschlag
- 52, 53: Befestigungsschrauben
- Pᵣ: Rückführungsdruck

## Patentansprüche

1. Einrichtung zur Zuführung von Schmierstoff an ein in einem Fahrzeug, einer Bau-, Land- oder Industriemaschine eingebautes Schmierstoffverteilersystem, das eine Mehrzahl von Schmierstellen (11, 12, 13) ggf. unter Zwischenschaltung eines oder mehrerer Progressivverteiler mit Schmierstoff versorgt,
umfassend ein Dosierbehältnis (15), in dem ein Schmierstoffaufnahmeraum (16) ausgebildet ist, wobei der Schmierstoffaufnahmeraum (16)
durch Innenwandungen (17, 18) des Dosierbehältnisses und eine Vorderseite (19) eines verschieblich gelagerten Kolbens (20) begrenzt ist, wobei der Schmierstoffaufnahmeraum (16) weiterhin einen Schmierstoff -einlass (21) zur Aufnahme einer vorbestimmten Menge an Schmierstoff und einen Schmierstoffauslass (22) zur Abgabe von Schmierstoff an das Schmierstoffverteilersystem (10) aufweist,
wobei das Dosierbehältnis (15) einen Druckbeaufschlagungsraum (23) an der dem Schmierstoffaufnahmeraum (16) abgewandten Seite des Kolbens aufweist und wobei der Druckbeaufschlagungsraum (23) über einen Druckfluidanschluss (24) mit vom Fahrzeug, von der Bau-, Land- oder Industriemaschine bereitgestelltem Druckfluid (hydraulisch oder pneumatisch) beaufschlagbar ist.

2. Einrichtung nach Anspruch 1,
**dadurch gekennzeichnet,**
**dass** eine Zumesseinrichtung (25) am Dosierbehältnis (15) vorgesehen ist, die eine Einstellung bzw. Kontrolle des Verschiebeweges des Kolbens (20) ermöglicht, derart, dass pro Kolbenhub eine einstellbare bzw. kontrollierbare Menge an Schmierstoff dem Schmierstoffverteilersystem zugeführt wird.

3. Einrichtung nach Anspruch 2,
**dadurch gekennzeichnet,**
**dass** die Zumesseinrichtung (25) eine mit dem Kolben (20) verbundene Stange (26) umfasst.

4. Einrichtung nach Anspruch 3,
**dadurch gekennzeichnet,**
**dass** die Stange (26) in einer Führung (35) innerhalb der stirnseitigen Wandung (29) verschieblich gelagert ist.

5. Einrichtung nach Anspruch 4,
**dadurch gekennzeichnet,**
**dass** im Bereich der Führung (35) zur Abdichtung gegen den Druck des Druckfluidsabdichtmittels (36) vorgesehen sind.

6. Einrichtung nach einem der vorhergehenden Ansprüche,
**dadurch gekennzeichnet,**
**dass** das dem Kolben (20) abgewandte Ende der Stange (26) in einem transparentem Gehäuse (27) geführt ist, das an der stirnseitigen Wandung (29) des Dosierbehältnises (14) befestigt ist.

7. Einrichtung nach einem der Ansprüche 3 bis 6,
**dadurch gekennzeichnet,**
**dass** die Stange (26) an ihrem dem Kolben (20) abgewandten Ende durch einen Anschlag am Dosierbehältnis (15) geführt ist und ein Begrenzungsmittel umfasst, welchen an einer gewünschten Position der Stange (26) außerhalb des Anschlages festlegbar ist, derart, dass der Verschiebeweg des Kolbens (20) einstellbar begrenzt ist.

8. Einrichtung nach Anspruch 7,
**dadurch gekennzeichnet,**
**dass** der Anschlag durch einer Außenfläche (34) einer stirnseitige Wandung (29) des Dosierbehältnisses (15) gebildet wird.

9. Einrichtung nach Anspruch 7 oder 8,
**dadurch gekennzeichnet,**
**dass** die Stange (26) an ihrem dem Kolben (20) abgewandten Ende einen Außengewindeabschnitt aufweist und die Begrenzungsmittel eine auf dem Außengewindeabschnitt sitzende Einstellmutter umfassen.

10. Einrichtung nach einem der Ansprüche 1 bis 9,
**dadurch gekennzeichnet,**
**dass** der Druckfluidanschluss (24) eine vorzugsweise einstellbare Drosseleinrichtung (32) zur Reduzierung der Fließgeschwindigkeit des zur Beaufschlagung des Kolbens (20) genutzten und vom Fahrzeug, der Bau-, Land- oder Industriemaschine bereitgestellten Druckfluids umfasst.

11. Einrichtung nach einem der Ansprüche 1 bis 10,
**dadurch gekennzeichnet,**
**dass** der Druckfluidanschluss (24) ein erstes Rückschlagventil (33) umfasst, das eine Rückführung des Druckfluids und damit eine Reduzierung des Volumens des Druckbeaufschlagungsraumes (23) gestattet, wenn der vom Fahrzeug, der Bau-, Land- oder Industriemaschine am Druckfluidanschluss (24) entgegengesetzte Druck unter einem bestimmten Rück1führungsdruck Pᵣ abgefallen ist.

12. Verfahren zur Zuführung von Schmierstoff an ein in ein Fahrzeug, eine Bau-, Land- oder Industriemaschine eingebautes Schmierstoffverteilersystem, das eine Mehrzahl von Schmierstellen (11, 12, 13) ggf. unter Zwischenschaltung eines oder mehrerer Progressivverteiler mit Schmierstoff versorgt, umfassend die folgenden Schritte:
- Befallen eines Schmierstoffaufnahmeraumes (16) eines Dosierbe hältnisses (15) mit einer vorbestimmten Menge an Schmierstoff
- Einpressen der im Dosierbehältnis (15) aufgenommenen Menge an Schmierstoff in das Schmierstoffverteilersystem,
**dadurch gekennzeichnet,**
**dass** das Einpressen unter Einwirkung von Druckfluid aus einem an sich zum Antrieb von Arbeitseinrichtungen dienenden Druckfluidsystem einer Arbeitseinrichtung eines Fahrzeuges, einer Bau-, Land- oder Industriemaschine erfolgt.

13. Verfahren nach Anspruch 12,
**dadurch gekennzeichnet,**
**dass** beim Befüllen des Schmierstoffaufnahmeraumes (16) dessen aktuelles Volumen, d.h. die bereits aufgenommene Menge an Schmierstoff kontrolliert, insbesondere anhand einer Skala abgelesen werden kann.

14. Verfahren nach Ansprüche 12 oder 13,
**dadurch gekennzeichnet,**
**dass** vor bzw. bei erneutem Befüllen des Schmierstoffaufnahmeraumes (16) ein mit Druckfluid gefüllter Druckbeaufschlagungsraum (23), insbesondere durch Rückführung des Druckfluids an das Fahrzeug, an die Bau-, Land- oder Industriemaschine geleert bzw. verkleinert wird.

15. Verfahren nach einem der Ansprüche 12 bis 14,
**dadurch gekennzeichnet,**
**dass** eine Rückführung des Druckfluids in einem Zeitraum vorgenommen wird, in dem eine Beaufschlagung parallel angeschlossener Arbeitseinrichtungen mit Druckfluid nicht erfolgt und der Druck unter einen Rückführungsdruck Pᵣ abgefallen ist.

16. Verfahren nach einem der Ansprüche 12 bis 15,
**dadurch gekennzeichnet,**
**dass** die Rückführung des Druckfluids durch den beim manuellen Befüllen des Dosierbehältnisses (15) ausgeübten Druck bewirkt wird.
